# EUROPEAN PATENT SPECIFICATION

(11) **EP 3 429 016 B1**
(45) Date of publication and mention of the grant of the patent: **28.04.2021**
(21) Application number: 17763451.6
(22) Date of filing: 10.03.2017
(51) Int. Cl.: H01M 10/0562, C01B 33/06, C04B 35/547, H01B 1/06, H01M 10/052, C01B 17/22, C01G 19/00

(54) **SULFIDE SOLID ELECTROLYTE**
FESTSTOFF-SULFID-ELEKTROLYT
ÉLECTROLYTE SOLIDE AU SULFURE

(30) Priority: 11.03.2016 JP 2016048790
(43) Date of publication of application: 16.01.2019
(73) Proprietor: Tokyo Institute of Technology, Tokyo 152-8550 (JP)
(72) Inventor: KANNO, Ryoji, Tokyo 152-8550 (JP); HIRAYAMA, Masaaki, Tokyo 152-8550 (JP); SUZUKI, Kota, Tokyo 152-8550 (JP); SUN, Yulong, Tokyo 152-8550 (JP)
(74) Representative: Krauns, Christian
(86) International application number: PCT/JP2017/009824
(87) International publication number: WO 2017/155119

(56) References cited:
- WO-A1-2013/118722
- DE-T5-112013 000 868
- DE-T5-112013 006 405
- JP-A- 2013 177 288
- US-A1- 2015 037 687

## Description

### FIELD

The present invention relates to a sulfide solid electrolyte having an LGPS-type crystal structure and good ionic conductivity, in particular having a Sn-Si solid solution without Ge.

### BACKGROUND

In recent years, with the rapid spread of information-related devices and communication devices such as personal computers, video cameras and cellular phones, , the development of batteries used as the power sources thereof has been regarded as important. Furthermore, in the automobile industry and the like, the development of high-power and high-capacity batteries for electric vehicles or hybrid vehicles is under way. Currently, among various types of batteries, from the viewpoint of high energy density, lithium batteries have been attracting attention.

Since an electrolytic solution containing a flammable organic solvent is used in lithium batteries which are currently available, it is necessary to install a safety device that suppresses an increase in temperature upon short circuit and to improve the structure and materials in order to prevent short circuits. Conversely, in lithium batteries in which the electrolytic solution is changed to a solid electrolyte layer and the battery is made fully solid, since a flammable organic solvent is not used in the battery, the safety device can be simplified, bringing about improved manufacturing cost and productivity.

Sulfide solid electrolyte materials are known as solid electrolyte materials for use in all-solid-state lithium batteries. For example, Non-Patent Literature 1 discloses a Li ion conductor (sulfide solid electrolyte material) having an Li₍₄₋ₓ₎Ge₍₁₋ₓ₎PₓS₄ composition. Furthermore, Patent Literature 1 discloses an LiGePS-based sulfide solid electrolyte material with a high ratio of crystal phases having characteristic peaks in X-ray diffraction measurement. Further, Non-Patent Literature 2 discloses an LiGePS-based sulfide solid electrolyte material. The US 2015/037687 A1 discloses a sulfide solid electrolyte material having a high ion conductivity and a low reduction potential. It provides a sulfide solid electrolyte material including an M1 element (such as a Li element), an M2 element (such as a Ge element, a Si element and a P element) and a S element, wherein the material has a peak at a position of 2Θ = 29.58° ±0.50° in X-ray diffraction measurement using a CuKα line; and when a diffraction intensity at the peak of 2Θ = 29.58° ±0.50° is regarded as IA and a diffraction intensity at a peak of 2Θ = 27.33° ±0.50° is regarded as IB, a value of IB/IA is less than 0.50, and M2 contains at least P and Si.

### [CITATION LIST]

### [PATENT LITERATURE]

[PTL 1] WO 2011/118801

### [NON PATENT LITERATURE]

[NPL1] Ryoji Kanno et al., "Lithium Ionic Conductor Thio-LISICON The Li2S-GeS2-P2S5 System", Journal of the Electrochemical Society, 148 (7), A742-A746 (2001)
[NPL2] Noriaki Kamaya et al., "A Lithium Superionic Conductor", Nature Materials, Advanced Online Publication, 31 July 2011, DOI: 10.1038/NMAT3066

### SUMMARY

### [TECHNICAL PROBLEM]

From the viewpoint of high battery output, a solid electrolyte material having good ionic conductivity is desired.

Non-Patent Literature 2 reports Li₁₀GeP₂S₁₂ (hereinafter, sometimes referred to as "LGPS-based sulfide solid electrolyte", "LGPS", etc.) exhibiting high ionic conductivity comparable to a 12 x 10⁻³ Scm⁻¹ electrolytic solution. However, Ge is expensive. Furthermore, Ge has low chemical stability, such as electrochemical reduction resistance. Regarding the LGPS-based sulfide solid-state electrochemical material described in Patent Literature 1, the reduction potential of Ge is about 0.25 V (vs Li/Li+). When used in a battery together with a negative electrode active material having an operating potential lower than 0.25 V, there is a problem that the sulfide solid electrolyte material is reductively decomposed and deteriorated.

The present invention has been achieved in light of the above problem and aims to provide a sulfide solid electrolyte material which does not contain Ge and which has good electrochemical stability and high lithium ion conductivity.

### [SOLUTION TO PROBLEM]

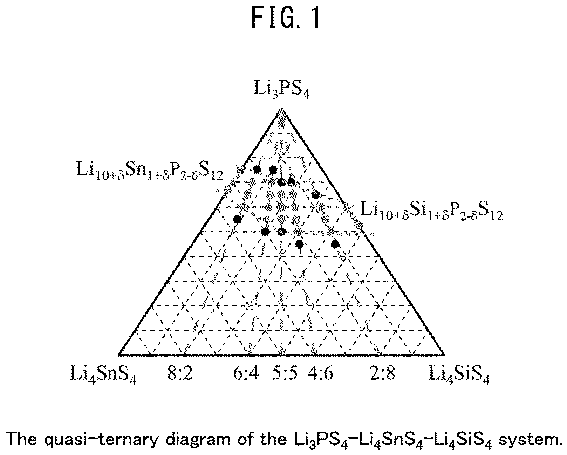

In order to solve the above problem, as a result of diligent research, the present inventors have devised to replace Ge in an LGPS-based sulfide solid electrolyte material with Sn and Si. As a result, the present inventors have discovered that in a solid solution region (refer to FIG. 1) of a quasi-ternary Li₄SnS₄-Li₄SiS₄-Li₃PS₄ system, a solid conductive material of the composition formula Li₄₋ₓ[Sn_{y}Si_{(1-y)}]₍₁₋ₓ₎PₓS₄ (LSSPS (y:1-y)x) excellent in ionic conductivity can be obtained and further that a solid conductive material having excellent ionic conductivity can be obtained even when the ratio of Li to [Sn_{y}Si_{(1-y)}] is changed, whereby the present invention has been completed.

According to the present invention, the following means are provided.
[1] A sulfide solid electrolyte, represented by the composition formula:

   Li_{4-4z-x}[Sn_{y}Si_{1-y}]_{1+z-x}PₓS₄

   (where 0.5 ≤ x ≤ 0.6, y = 0.2, and 0> z ≥ -0.2), wherein
   the sulfide solid electrolyte has a peak at position 2θ = 29.58° ± 0.50° in X-ray diffraction measurement using CuKα radiation and does not have a peak at position 2θ = 27.33° ± 0.50° in X-ray diffraction measurement using CuKα radiation, or when the sulfide solid electrolyte has a peak at the position 2θ = 27.33° ± 0.50°, the value of I_{B}/I_{A} is less than 0.50 (where I_{A} is the diffraction intensity of the 2θ = 29.58° ± 0.50° peak and I_{B} is the diffraction intensity of the 2θ = 27.33° ± 0.50° peak).
[2] The sulfide solid electrolyte according to [1], wherein in a crystal phase having a peak at position 2θ = 29.58° ± 0.50°, the a-axis length of the lattice constant is 8.65 to 8.70 angstrom and the c-axis length is 12.55 to 12.62.
[3] The sulfide solid electrolyte according to [2], wherein in the axis length ranges, the axis lengths gradually decrease as x in the composition formula increases.

### [ADVANTAGEOUS EFFECTS OF INVENTION]

According to the present invention, even though the sulfide solid electrolyte material does not contain Ge, it exhibits high ionic conductivity comparable to LGPS-based sulfide solid electrolyte materials. Further, since the sulfide solid electrolyte does not contain relatively expensive Ge, cost can be greatly reduced as compared with solid electrolyte materials containing Ge as an indispensable component, such as conventional LGPS-based materials. Furthermore, although Ge has low reduction resistance, the sulfide solid electrolyte material of the present invention, which does not contain Ge, can be expected to improve electrochemical stability such as reduction resistance.

### BRIEF DESCRIPTION OF DRAWINGS

FIG. 1 shows a quasi-ternary diagram of an Li₃PS₄-Li₄SnS₄-Li₄SiS₄ system.
FIG. 2 shows examples of the X-ray diffraction patterns of synthesized samples having the composition formula Li_{4-4z-x}[Sn_{y}Si_{1-y}]_{1+z-x}PₓS₄ (where y = 0.2 to 0.8 and z = 0) useful for the understanding of the present invention.
FIG. 3 shows examples of the X-ray diffraction patterns of synthesized samples having the composition formula Li_{4-4z-x}[Sn_{y}Si_{1-y}]_{1+z-x}PₓS₄ (where y = 0.2 and z = -0.1 to -0.4).
FIG. 4 shows examples of a chart of the lattice parameters of Li_{4-4z-x}[Sn_{0.2}Si_{0.8}]_{1+z-x}PₓS₄ (where 0.50 ≤ x ≤ 0.60 and Z = 0) solid solutions useful for the understanding of the present invention.
FIG. 5 shows examples of the crystal structure of Li_{3.45}[Sn_{0.2}Si_{0.8}]_{0.45}P_{0.55}S₄.
FIG. 6 shows examples of the synchrotron X-ray Rietveld refinement patterns of Li_{3.45}[Sn_{0.09}Si_{0.36}]P_{0.55}S₄.
FIG. 7 shows examples of the impedance spectra and Arrhenius plot of Li_{3.45}[Sn_{0.09}Si_{0.36}]P_{0.55}S₄ (Li₄₋ₓ[Sn_{0.2}Si_{0.8}]₁₋ₓPₓS₄, where x = 0.55) (sintered body).
FIG. 8 shows an example of the cyclic voltammogram for Li_{3.45}[Sn_{0.09}Si_{0.36}]P_{0.55}S₄.
FIG. 9 shows examples of the charge-discharge curves of all-solid-state batteries using an Li_{3.45}[Sn_{0.09}Si_{0.36}]P_{0.55}S₄ electrolyte or an LGPS electrolyte.
FIG. 10 shows an example of the synthesis process for Li_{4-4z-x}[Sn_{y}Si_{(1-y)}]_{(1+z-x)}PₓS₄.

### DESCRIPTION OF EMBODIMENTS

As a result of diligent research, the present inventors have devised to replace Ge in an LGPS-based sulfide solid electrolyte material with Sn and Si and have discovered that in the solid solution region (refer to FIG. 1) of a quasi-ternary Li₄SnS₄-Li₄SiS₄-Li₃PS₄ system, a solid conductive material of the composition formula Li₄₋ₓ[Sn_{y}Si_{(1-y)}]₍₁₋ₓ₎PₓS₄ (LSSPS (y:1-y)x) excellent in ionic conductivity can be obtained and further that a solid conductive material having excellent ionic conductivity can be obtained even when the ratio of Li to [Sn_{y}Si_{(1-y)}] is changed, whereby the present invention has been completed.

The sulfide solid electrolyte material of the present invention and a method for the production therefor will be described in detail below.

The sulfide solid electrolyte material according to the present invention includes a sulfide-based solid electrolyte represented by the composition formula Li_{4-4z-x}[Sn_{y}Si_{1-y}]_{1+z-x}PₓS₄ (where 0.5 ≤ x ≤ 0.6, y = 0.2, and 0 > z ≥ -0.2).

FIG. 1 is a quasi-ternary diagram of an Li₄SnS₄-Li₄SiS₄-Li₃PS₄ system and the composition formula of the substance in this ternary diagram is represented by Li₄₋ₓ[Sn_{y}Si_{1-y}]₁₋ₓPₓS₄. x corresponds to the composition ratio of Li₃PS₄. The substance of the above composition formula is positioned at the top vertex of the ternary diagram when x = 1 and the substance of the above composition formula is positioned at the lower base of the ternary diagram when x = 0. y is related to the composition ratio of Sn and Si and is represented by Sn:Si = y:1-y. The ratios of Sn:Si are shown as indications on the lower base side of the ternary diagram. Further, broken lines extending from the positions of these indications to the upper vertex are shown. For example, on the broken line extending from the 2:8 on the lower base side to the upper vertex, compositions in which x varies while the Sn:Si ratio is maintained at 2:8 are obtained. The sulfide solid electrolyte material of the present invention is defined as 0.5 ≤ x ≤ 0.6 and y = 0.2 in the composition formula.

Substances having good ionic conductivity cannot be obtained at all of the points (compositions) in the ternary diagram. The present inventors have discovered that when a material having an Li₄₋ₓ[Sn_{y}Si_{1-y}]₁₋ₓPₓS₄ composition has the same crystal structure as LGPS-based sulfide solid electrolytes, i.e., an LGPS-type crystal phase, the material has good ionic conductivity. The crystal structure of LGPS-based sulfide solid electrolytes has a peak at position 2θ = 29.58° ± 0.50° in X-ray diffraction measurement using CuKα radiation and does not have a peak at position 2θ = 27.33° ± 0.50° in X-ray diffraction measurement using CuKα radiation, or when the crystal structure has a peak at the position 2θ = 27.33° ± 0.50°, the value of I_{B}/I_{A} is less than 0.50 (where I_{A} is the diffraction intensity of the 2θ = 29.58° ± 0.50° peak and I_{B} is the diffraction intensity of the 2θ = 27.33° ± 0.50° peak). According to the invention of the present application, the material having an Li₄₋ₓ[Sn_{y}Si_{1-y}]₁₋ₓPₓS₄ composition satisfies the above-described peak conditions, i.e., has the same crystal structure as LGPS-based sulfide solid electrolytes. Without being bound to any particular theory, it is believed that the electrolyte material of the present application has a crystal structure in which the Ge of the LGPS-based sulfide solid electrolyte material is substituted with Sn-Si in a solid solution state, and as a result, has a high ionic conductivity like LGPS-based sulfide solid electrolytes. Further, since the electrolyte material of the present application contains Si, a sulfide solid electrolyte material having a low reduction potential can be obtained. Since Si has a small ionic radius and forms a strong bond with S, it is thought that Si has a property by which it is not easily reductively decomposed, and as a result, it is presumed that the reduction potential thereof is low. Further, when comparing the alloying potential with Li, Si is in the vicinity of 0.35 V (Li/Li⁺), which is lower than the vicinity of 0.4 V (Li/Li⁺) of Ge, and is difficult to alloy with Li, and as a result, the reduction potential of the electrolyte material of the present application is presumed to be low. The presumed reduction potential of the electrolyte material of the present application is about 0.175 V (vs. Li/Li+). Conversely, the presumed reduction potential of the LGPS (Li_{3.33}Ge_{0.33}P_{0.67}S₄) is about 0.255 V (vs. Li/Li⁺), and therefore, the electrolytic material of the present application is not subject to reductive decomposition.

LGPS-based sulfide solid electrolytes may include crystal structures other than an LGPS-type crystal structure having high ionic conductivity, for example, a crystal phase having a peak in the vicinity of 2θ = 27.33°. However, the crystal phase having a peak in the vicinity of 2θ = 27.33° does not have high ionic conductivity. Thus, in order to distinguish the electrolyte material of the present application from sulfide solid electrolyte materials having low ionic conductivity, the value of I_{B}/I_{A} is specified to be less than 0.50 when I_{A} is the diffraction intensity of the peak in the vicinity of 2θ = 29.58° and I_{B} is the diffraction intensity of the peak in the vicinity of 2θ = 27.33°. From the viewpoint of ionic conductivity, it is preferable that the ratio of the high-ionic conductivity crystal phase (having a peak position of 2θ = 29.58°) of the sulfide solid electrolyte material of the present application be high. Thus, the value of I_{B}/I_{A} is preferably smaller. Specifically, the ratio is preferably 0.45 or less, more preferably 0.25 or less, further preferably 0.15 or less, and particularly preferably 0.07 or less. Furthermore, the value of I_{B}/I_{A} is preferably zero. In other words, the sulfide solid electrolyte material of the present application preferably does not have a peak in the vicinity of 2θ = 27.33°. In the electrolyte material of the present invention, it is possible to obtain a solid electrolyte material having a high ratio of crystal phase having a peak in the vicinity of 2θ = 29.58° and good ionic conductivity.

The peak position of 2θ = 29.58°is an actually measured value. The crystal lattice may change slightly due to the composition of the material, etc., and as a result, the position of the peak sometimes deviates somewhat from 2θ = 29.58°. Thus, the peak is defined as a peak at a position of 29.58° ± 0.50°. Since it is considered that LGPS-based sulfide solid electrolytes, which have high ionic conductivity, normally have peaks at 2θ = 17.38°, 20.18°, 20.44°, 23.56°, 23.96°, 24.93°, 26.96°, 29.07°, 29.58°, 31.71°, 32.66°, and 33.39°, the electrolyte material of the present application can also have peaks at these positions. Note that these peak positions may also deviate in the range of ± 0.50°.

The peak in the vicinity of 2θ = 27.33° is one of the peaks of the low ionic-conductivity crystal phase, as described above. The peak position of 2θ = 27.33° is an actually measured value. The crystal lattice may change slightly due to the composition of the material, etc., and as a result, the position of peak sometimes deviates somewhat from 2θ = 27.33°. Thus, the above peak of the low-ionic conductivity crystal phase is defined as the peak at the position of 27.33° ± 0.50°. It is considered that the crystal phase having low ionic conductivity normally has peaks at 2θ = 17.46°, 18.12°, 19.99°, 22.73°, 25.72°, 27.33°, 29.16°, and 29.78°. Note that these peak positions may also deviate in the range of ± 0.50°.

Further, the inventors of the present invention have discovered that a solid conductive material having excellent ionic conductivity can be obtained even when the ratio of Li to [Sn_{y}Si_{(1-y)}] is changed. More specifically, a coefficient z has been added to the composition ratio of Li and [Sn_{y}Si_{(1-y)}] in the above composition formula, whereby a solid conductive material excellent in ionic conductivity can be obtained in the range of 0 ≥ z ≥ -0.2 for the composition formula Li_{4-4z-x}[Sn_{y}Si_{1-y}]_{1+z-x}PₓS₄. The coefficient z is related to the composition ratio of Li and [Sn_{y}Si_{(1-y)}] in the composition, and the smaller the z, the lower the ratio of [Sn_{y}Si_{(1-y)}] and the higher the ratio of Li.

Note that FIG. 1 is not suitable for expressing the change in P since when z changes, namely, when the ratio of Li to [Sn_{y}Si_{(1-y)}] changes, the point on the ternary diagram of FIG. 1 moves vertically, but the ratio of P (P is not related to the coefficient z) also changes accordingly.

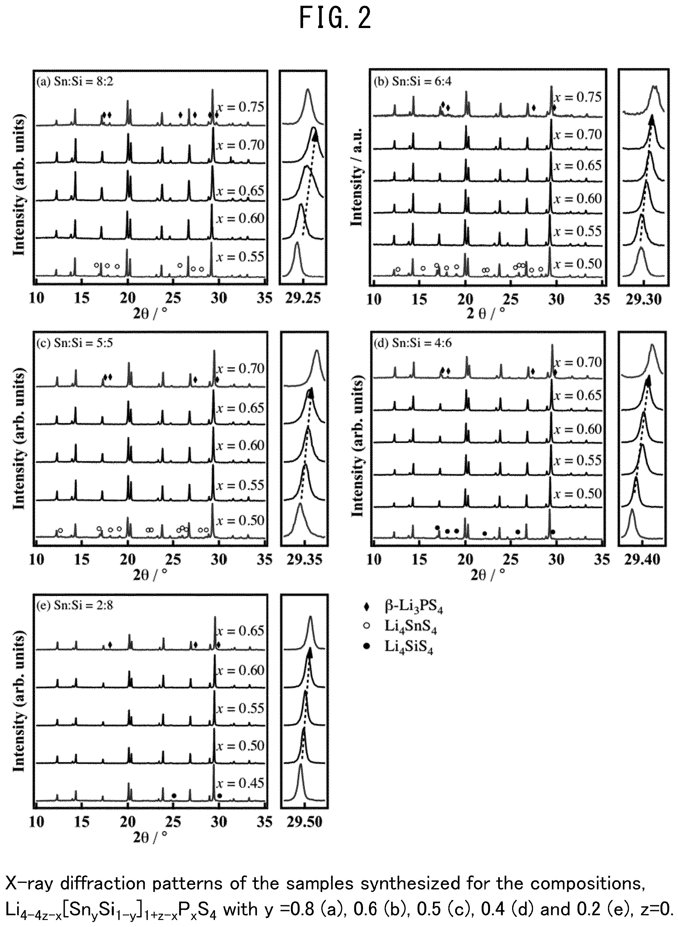

FIG. 2 shows examples of the X-ray diffraction intensity patterns of the Li_{4-4z-x}[Sn_{y}Si_{1-y}]_{1+z-x}PₓS₄ electrolyte material useful for the understanding of the present application (z = 0). In FIG. 2, five charts (a) to (e) in which y is changed, i.e., the ratio of Sn:Si is changed, are shown. Further, in each chart, x is changed, i.e., the relative amount of P is changed. In all of these patterns, a large peak is observed in the vicinity of 2θ = 29.58°, indicating that these compositions have a LGPS-type crystal structure having high ionic conductivity. However, if x is too low or too high, peaks of crystal structures other than the LGPS-type crystal structure, for example, β-Li₃PS₄, Li₄Sn₄, Li₄SiS₄ (corresponding to compositions at each vertex of the ternary diagram) can be observed, indicating that a single LGPS-type phase cannot be obtained. In the composition formula of the electrolyte material of the present invention, 0.5 ≤ x ≤ 0.6 and y = 0.2, suggesting that a single LGPS-type phase can be obtained (refer to FIG. 2(e)).

Further, the peak in the vicinity of 2θ = 29.58° is enlarged and displayed on the right side of each of charts (a) to (e). In these enlarged views, as x increases, the peak position moves smoothly to the right, which suggests that a solid solution state occurs in the LGPS-type crystal phase.

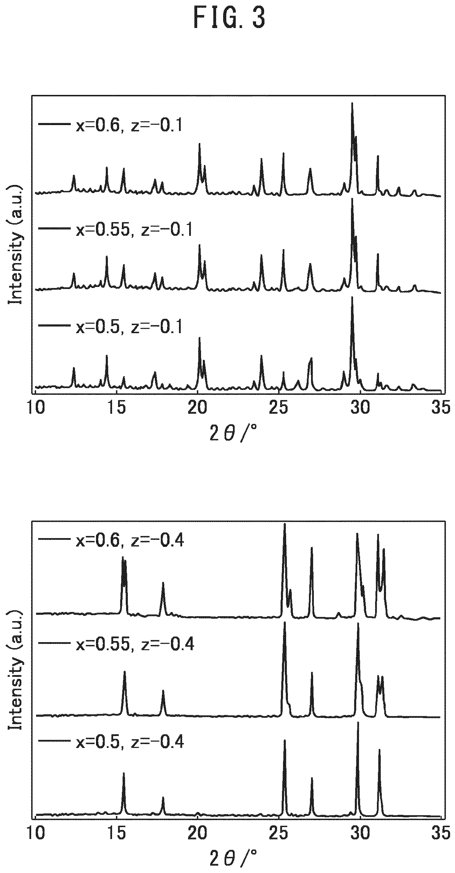

FIG. 3 shows examples of X-ray diffraction intensity patterns when 0.5 ≤ x ≤ 0.6, y = 0.2, and z is changed (z = -0.1 or -0.4). In all of these patterns, a large peak is observed in the vicinity of 2θ = 29.58°, indicating that these compositions have a LGPS-type crystal structure having high ionic conductivity. However, when z is too low (when z = -0.4), the peak in the vicinity of 2θ = 27.33° becomes significant. As described above, this peak is one of the peaks of the low ionic-conductivity crystal phase. Namely, the value of I_{B}/I_{A} described above may become 0.50 or more in some cases. Thus, the range of z is limited to 0 ≥ z ≥ -0.2. As a result, the value of I_{B}/I_{A} is less than 0.5, and a solid electrolyte material having good ionic conductivity can be obtained.

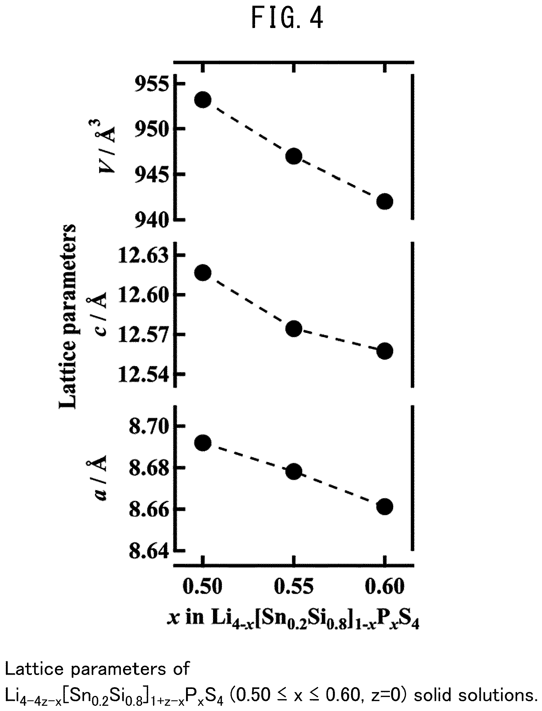

FIG. 4 shows the change in lattice constant in the Li_{4-4z-x}[Sn_{0.2}Si_{0.8}]_{1+z-x}PₓS₄ solid electrolyte material useful for the understanding of the present application, which has an LGPS-type crystal phase, when x is changed from 0.5 to 0.6 (z = 0). The Rietveld method was used to obtain the lattice constants. The Rietveld method is a structural analysis method which makes it possible to obtain many structural parameters with high accuracy from diffraction patterns obtained by powder X-ray diffraction measurement and neutron diffraction measurement. In the range of x = 0.5 to 0.6, the a-axis length of the lattice constant is 8.65 to 8.70 angstrom and the c-axis length is 12.55 to 12.62. Even if x is outside of this range, it is possible to extrapolate to some extent to obtain the axis lengths since the change of the axis lengths is smooth.

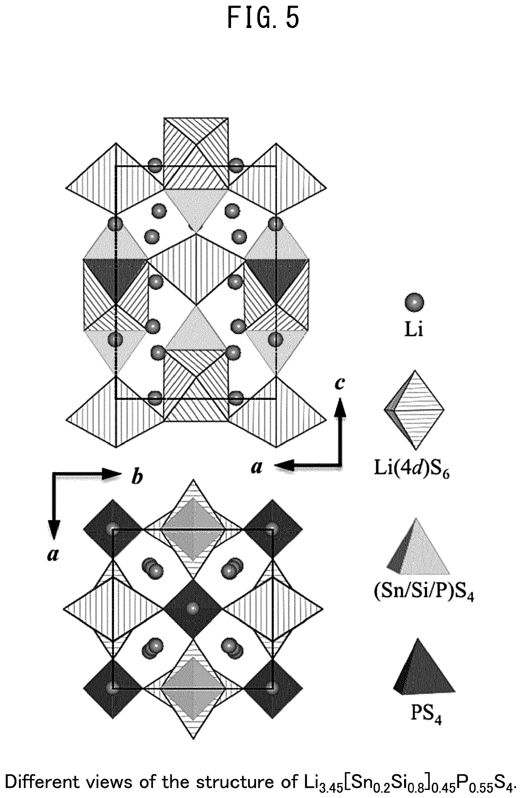

In FIG. 4, as x increases in the range of 0.5 to 0.6, the a-axis length and the c-axis length decrease gradually. This also suggests that a solid solution state occurs in the LGPS-type crystal phase. Without being bound to any particular theory, it is considered that since the (Sn/Si/P)S₄ tetrahedrons are included in the crystal structure (refer to FIG. 5) and the radius of P⁴⁺ is smaller than the average radius of Sn⁴⁺/Si⁴⁺, as x corresponding to the P content ratio increases, the axis lengths of the lattice constant gradually decrease.

In the X-ray diffraction intensity pattern when z is defined as 0 ≥ z ≥ -0.2, the value of I_{B}/I_{A} is less than 0.5. Thus, it is considered that an LGPS-type sulfide solid electrolyte having high ionic conductivity is included therein. In other words, even when z varies in the range of 0 ≥ z ≥ -0.2, it is considered that the LGPS-type crystal phase is maintained while the axis lengths of the lattice constant change in a smooth manner.

FIG. 5 is a perspective view detailing an example of the crystal structure of the Li_{4-4z-x}[Sn_{y}Si_{1-y}]_{1+z-x}PₓS₄ electrolyte material of the present application. In the crystal structure shown in FIG. 5, the octahedron has Li as the central element and has six S atoms at the apexes of the octahedron, and is typically an LiS₆ octahedron. The (Sn/Si/P)S₄ tetrahedron has Sn/Si/P as the central element and four S atoms at the apexes of the tetrahedron, and is typically an SiS₄ tetrahedron, an SnS₄ tetrahedron, or a PS₄ tetrahedron. The PS₄ tetrahedron is a tetrahedron having P as the central element and four S atoms at the apexes of the tetrahedron. Furthermore, the (Sn/Si/P)S₄ tetrahedrons and octahedrons share edges, and the PS₄ tetrahedrons and the octahedrons share vertices. In FIG. 5, the quadrangles, which connect the tetrahedrons and octahedrons, represent unit cells

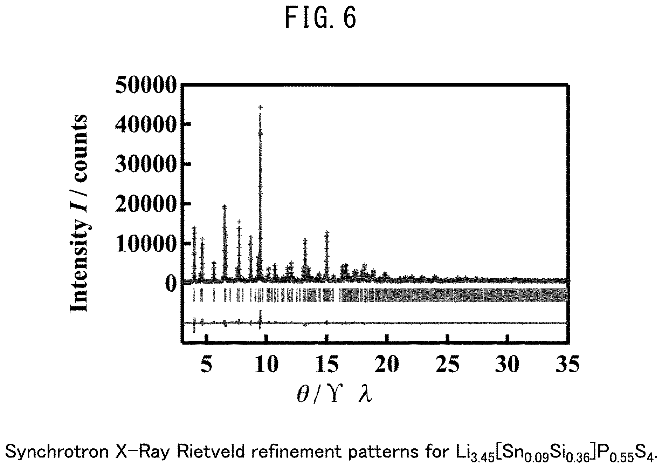

FIG. 6 is an example of a synchrotron X-ray Rietveld refinement pattern for the Li_{4-4z-x}[Sn_{y}Si_{1-y}]_{1+z-x}PₓS₄ electrolyte material of the present application. The observed data is represented by the symbol (+), and the actual radiation superimposed on the data is obtained by Rietveld analysis. The observation data and the analysis results are consistent. The bottom line in Fig. 6 shows the difference between the observed value and the calculated value intensity. The difference thereof is very small, confirming that the observation data and the analysis results are consistent.

The vertical symbol (|) plotted between the upper and lower lines is the possible Bragg reflection position of the space group P4₂/nmc of the LGPS-type crystal phase. This also confirms that the electrolyte material of the present application has an LGPS-type crystal phase.

Synchrotron X-ray measurement is a measurement method using synchrotron radiation (electromagnetic waves generated when the traveling direction of electrons travelling straight at a speed close to the speed of light is changed). Since synchrotron radiation has a high brightness, the crystal structure can be analyzed in detail.

The sulfide solid electrolyte material of the present application has an LGPS-type crystal structure and is typically a crystalline sulfide solid electrolyte material. The sulfide solid electrolyte material of the present application preferably has a high ionic conductivity. The ionic conductivity of the sulfide solid electrolyte material at 25 °C, when powdered sulfide solid electrolyte material is formed into sintered pellets, is preferably 5.0 x 10⁻³ S/cm or more, more preferably 7.0 x 10⁻³ S/cm or more, further preferably 9.0 x 10⁻³ S/cm or more, and may further preferably be 11.0 x 10⁻³ S/cm or more.

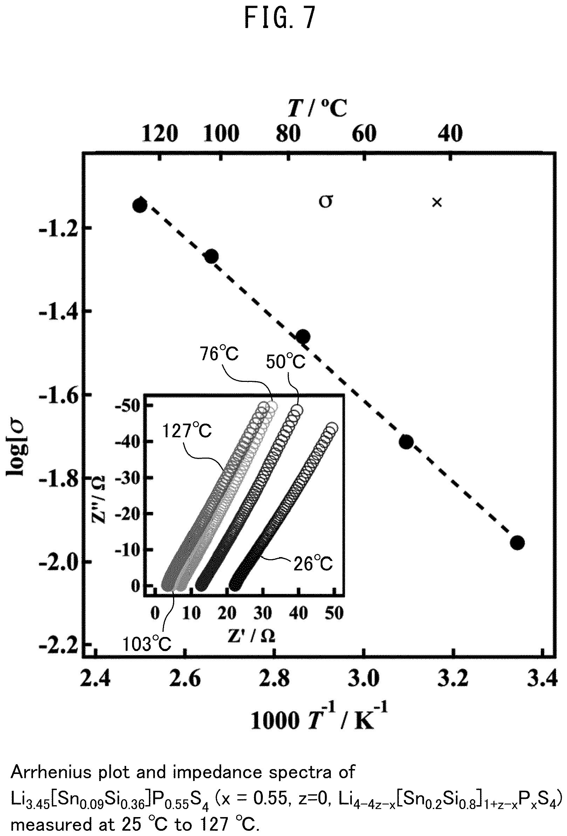

The ionic conductivity of sintered pellets of a powder of Li_{3.45}[Sn_{0.09}Si_{0.36}]P_{0.55}S₄, which is an example of the sulfide solid electrolyte material of the present application, was measured at 26 to 127 °C. FIG. 7 shows temperature-dependent impedance and an Arrhenius plot. The ionic conductivity at each temperature is obtained as the sum of the bulk/grain boundary resistances. The activation energy is 19 kJ/mol, which is a typical value for excellent ionic conductors. The ionic conductivity at room temperature was calculated as 11.0 × 10⁻³ S/cm. This value is better than the 5.0 × 10⁻³ S/cm of LSnPS (the composition of the lower left vertex in FIG. 1) or the 6.7 × 10⁻³ S/cm of LSiPS (the composition of the lower right vertex in FIG. 1). Furthermore, though conventional LGPS solid electrolytes having an ionic conductivity of 12.0 × 10⁻³ S/cm have been reported, the sulfide solid electrolyte material of the present application can have a comparable ionic conductivity. Table 1 shows the ionic conductivity at x = 0.5 to 0.6 in which sintered pellets of powder Li_{4-4z-x}[Sn_{0.09}Si_{0.36}]_{1+z-x}PₓS₄ were used. Further, the form of the sulfide solid electrolyte material of the present application is not particularly limited, but may be, for example, a powder form. Moreover, the average particle size of the powder sulfide solid electrolyte material is preferably in the range of, for example, 0.1 µm to 50 µm.

### [Table 1]

**Table 1. Ionic conductivity of cold-pressed Li_{4-4z-x}[Sn_{0.2}Si_{0.8}]_{(1+z-x)}PₓS₄ sintered pellets (z=0)**

| Composition | Ionic conductivity (mS cm⁻¹) |
|---|---|
| x = 0.50 | 8.87 |
| x = 0.55 | 11 |
| x = 0.60 | 7.95 |

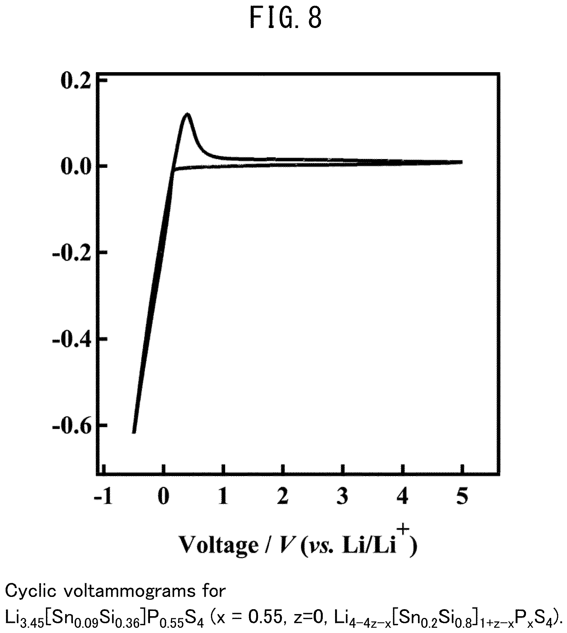

The electrochemical stability of the sulfide solid electrolyte material of the present application can be evaluated by cyclic voltammetry. FIG. 8 is a cyclic voltammogram of Li_{3.45}[Sn_{0.09}Si_{0.36}]P_{0.55}S₄, which is an example of the sulfide solid electrolyte material of the present application, in which an Li metal and Au were used as the electrodes. In FIG. 8, with exception of the peak due to the dissolution/precipitation reaction of lithium to Li/Li⁺ in the vicinity of 0 V, no significant current peaks are observed. This confirms that the sulfide solid electrolyte material of the present invention has a wide potential window. Since the Ge contained in LGPS has a low reduction resistance, it can be expected that reduction resistance of the sulfide solid electrolyte material of the present application is improved, since Ge is not contained therein.

Without being bound to any particular theory, it is believed that the lattice constant and lithium concentration affect ionic conductivity in the LGPS-type crystal phase. When the lattice constant is large, in the LGPS-type solid solution having a composition formula of Li_{4-4z-x}M_{1+z-x}PₓS₄ (M = Si, Ge, or Sn), the Sn may exhibit large ionic conductivity. However, due to the structural limitations of LGPS-type solid solutions, the presence ratio (1+z-x) of M is limited, and the solid solution regions of Si, Ge, and Sn are 0.525 ≤ x ≤ 0.60, 0.50 ≤ x ≤ 0.67, and 0.70 ≤ x ≤ 0.75, respectively (where 0 ≥ z ≥ -0.2). As the atomic radius of M increases, the proportion of elemental P in the MPS₄ tetrahedron increases and the volume increase effect decreases. As a result, the concentration of lithium also decreases. By adjusting the Sn:Si ratio in the MPS₄ tetrahedron, suitable lattice parameters having a high lithium concentration can be discovered. In other words, the inventors of the present invention conceived that the Sn/Si ratio, and the Sn⁴⁺, Si⁴⁺/P⁵⁺ ratio are important in order to optimize the tunnel size for facilitating the migration of lithium. Based on this idea, a region excellent in lithium ion conductivity has been found. Further, the inventors of the present invention have discovered that a solid conductive material having excellent ionic conductivity can be obtained even when the ratio of Li to M is changed, whereby the present invention was completed.

Since the sulfide solid electrolyte material of the present invention has high ionic conductivity, it can be used for any application requiring ionic conductivity. Among them, the sulfide solid electrolyte material of the present application is preferably used in batteries, since it can greatly contribute to higher battery output.

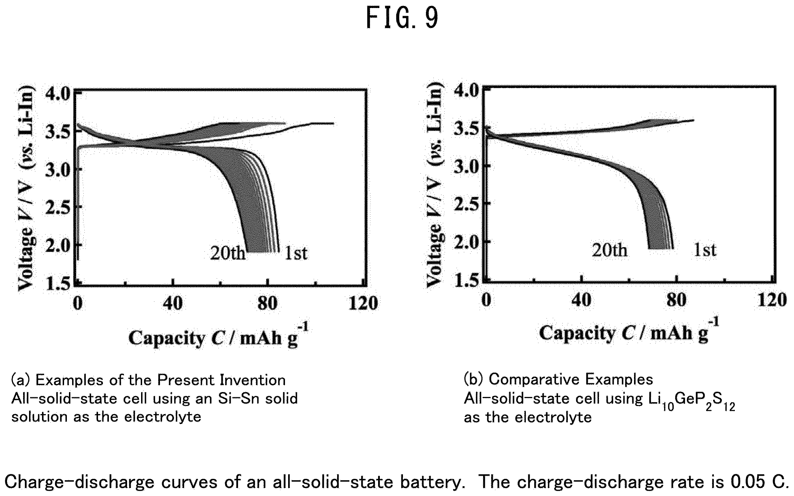

FIG. 9 shows the charge/discharge curves of an all-solid-state battery using Li_{3.45}[Sn_{0.09}Si_{0.36}]P_{0.55}S₄, which is an example of the sulfide solid electrolyte material of the present application, as an electrolyte, an LiCoO₂ cathode coated with LiNbO₃, and a Li-In alloy anode. The charge/discharge rate was 0.05 C. From FIG. 9, it can be seen that this battery operates satisfactorily without problems.

The method for producing the sulfide solid electrolyte material of the present application will be described. The method for producing the solid electrolyte material of the present application includes a raw material preparation step of milling, mixing and forming elemental Li, elemental Si, elemental Sn, elemental P, and elemental S to prepare a raw material composition and a heating step of heating the raw material composition to obtain a solid electrolyte material. Sulfides of each element, Li₂S, P₂S₅, SiS₂, and SnS₂, may be used as the feedstock for each element.

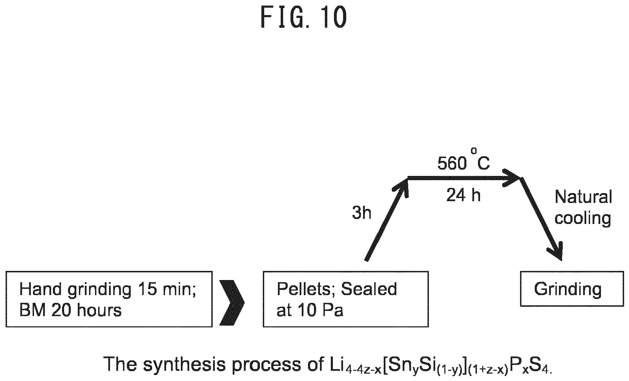

FIG. 10 is an explanatory view showing an example of the method for producing the solid electrolyte material of the present invention. In the solid electrolyte material production method of FIG. 10, first, Li₂S, P₂S₅, SiS₂, and SnS₂ are roughly crushed by hand, milled and mixed by a ball mill or the like, and pelletized to prepare a raw material composition. Next, the raw material composition is heated and a solid electrolyte material is obtained by a solid phase reaction.

Mechanical milling may be used for the milling and mixing. Mechanical milling is a method of milling a sample while applying mechanical energy. Examples of such mechanical milling include vibration milling, ball milling, turbo milling, mechanofusion, disk milling, and the like. Among these, vibration milling and a ball milling are preferable. The conditions of the vibration milling, which is an example of mechanical milling, are not particularly limited as long the object can be milled and mixed thereby. The vibration amplitude of the vibration milling is preferably in the range of, for example, 5 mm to 15 mm, in particular in the range of 6 mm to 10 mm. The vibration frequency of the vibration milling is preferably in the range of, for example, 500 rpm to 2000 rpm, particularly preferably in the range of 1000 rpm to 1800 rpm. The packing rate of the sample in vibration milling is preferably in the range of, for example, 1% by volume to 80% by volume, in particular 5% by volume to 60% by volume, and especially 10% by volume to 50% by volume. It is preferable to use an oscillator (for example, an oscillator made of alumina) in the vibration mill.

The conditions of ball milling are not particularly limited as long as the object can be milled and mixed thereby. In general, the higher the rotation speed, the faster the formation rate of the ion-conducting material, and the longer the processing time, the higher the rate of conversion from raw material composition to ion-conducting material. The rotational speed of the table when carrying out planetary ball milling is preferably in the range of, for example, 200 rpm to 500 rpm, particularly preferably in the range of 250 rpm to 400 rpm. Furthermore, the processing time for carrying out the planetary ball milling is preferably in the range of, for example, 1 hour to 100 hours, in particular 1 hour to 70 hours.

The heating temperature in the heating step can be appropriately adjusted in accordance with the raw material, but is preferably within the range of approximately 500 °C to 900 °C. Furthermore, the heating time includes the heating time and the resting time, and it is preferable to appropriately adjust each time so as to obtain a desired solid electrolyte material. For example, the heating time and the resting time may each be within the range of 30 minutes to 48 hours. The heating may be performed in a substantial vacuum. The substantial vacuum may be, for example, 0.01 to 100 Pa. Further, when cooling to room temperature after heating, natural cooling may be employed or annealing may be performed so that a desired solid electrolyte material can be obtained.

It is preferable to perform this series of steps in an inert gas atmosphere such as argon to prevent the raw material composition and the obtained solid electrolyte material from deteriorating due to moisture in the air.

### EXAMPLES

The present invention will be described in further detail below with reference to the Examples. Note that the following Examples do not limit the present invention.

### (Preparation of Li₃PS₄-Li₄SnS₄-Li₄SiS₄-based Samples)

The raw materials Li₂S, P₂S₅, SiS₂, and SnS₂ were hand-pulverized and weighed in an argon atmosphere glove box, and a mixed sample was prepared using a ball mill. The sample was placed in a pelleter and a pressure of 20 MPa was imparted to the pelleter using a uniaxial press machine to form pellets having a diameter of 13 mm. These pellets were sealed in a carbon-coated quartz tube in a substantial vacuum of 10 Pa. Thereafter, the quartz tube containing the pellets was heated to 560 °C (heating rate of about 3 °C/min) over 3 hours, maintained for 24 hours, and then naturally cooled. Further, pulverization was carried out for evaluation subsequent thereto. The composition of the synthesized sample is generally plotted in the ternary diagram of Table 1, but it may not be plotted in the ternary diagram of Table 1. Referring to the Li₃PS₄-Li₄SnS₄-Li₄SiS₄-based ternary composition diagram of FIG. 1, the composition represented by the gray circle symbol inside the triangle is a composition in which the LGPS-type crystal phase is confirmed as a single phase. The composition represented by the black circle symbol is a composition in which crystal phases other than the LGPS-type crystal phase have also been confirmed. The method of confirming the crystal phases will be described later.

The obtained samples were subjected to the following measurements and evaluations.

### (Powder X-ray Diffraction Measurement)

In order to identify the crystals contained in the prepared sample, powder X-ray diffraction measurement was performed using a powder X-ray diffractometer Ulima-IV (produced by Rigaku Corporation) and Smart Lab (produced by Rigaku Corporation). For the powder X-ray diffraction measurement, Cu-Kα radiation having an X-ray wavelength of 1.5418 angstrom was used. The powder X-ray diffraction measurement was performed at diffraction angles (2θ) in steps of 0.01° in the range of 10 to 35°.

### (Measurement of Conductivity of Sintered Pellets)

Crushed samples were placed in cells for sintered pellets, and a pressure of 169 MPa was applied to the cells at room temperature to produce pellets. Thereafter, sintering was carried out at 550 °C for 12 hours to obtain sintered pellets of the solid electrolyte materials of the various compositions. Samples for measurement having pellet diameters of about 10 mm and thicknesses of 1 to 2 mm were prepared. Au was used as an electrode and bonded to the sample for measurement to prepare a Au/sample for measurement/Au battery. A Frequency Response Analyzer manufactured by NF Corporation was used to measure the conductivity of the measurement sample. AC impedance was measured in the measurement range of 15 MHz to 100 Hz at a measurement temperature of 26 °C to 127 °C, an AC voltage of 50 to 100 mV, and an integration time of 2 seconds, whereby the conductivity of the sample was measured. The conductivity of solid electrolytes different from the solid electrolyte of the present invention were also examined as Comparative Examples.

### (Cyclic Voltammetry)

Electrochemical stability is also referred to as potential window, and can be evaluated by, for example, cyclic voltammetry by assembling a cell in which a conductive lithium ion inorganic solid electrolyte and a polymer composite molded body are interposed between a Au foil and a lithium foil. Measurement was carried out at a sweep rate of 1 mV/sec. A potentiostat/galvanostat Solatron 1287 (manufactured by Solartron Corp.) was used for the measurement. The scan rate was 1 mV/s and the scan range was -0.5 to 5 V vs. Li/Li⁺.

### (Constant Current Charge/Discharge Testing)

In the charge/discharge testing, interposed all-solid-state lithium batteries were constructed using, as a separator, the obtained sulfide solid electrolyte materials as a lithium ion conductive solid electrolyte, as a cathode, a lithium cobalt oxide coated with lithium niobate, and as an anode, a lithium-indium alloy. The batteries were charged and discharged at 1/20 C (= 7.25 mA/g).

As Comparative Examples, batteries using an LGPS (Li₁₀GeP₂S₁₂) sulfide solid electrolyte as an electrolyte material were prepared, and charging and discharging were carried out under the same conditions as above.

### [Evaluation]

### (Powder X-ray Diffraction)

X-ray diffraction (XRD) measurement was carried out using the obtained sulfide solid electrolyte materials shown in the ternary diagram of FIG 1. A part of the results arc shown in FIG 2. The crystal structure of the LGPS-type sulfide solid electrolyte having good ionic conductivity has peak at position 2θ = 29.58° ± 0.50° in X-ray diffraction measurement using CuK α radiation. As shown in FIG. 2, the sulfide solid electrolyte materials of the present application also had a peak in this position. Further, when the sulfide solid electrolyte material of the present application has a peak at the position 2θ = 27.33° ± 0.50°, the value of I_{B}/I_{A} was less than 0.50 (where I_{A} is the diffraction intensity of the 2θ = 29.58° ± 0.50° peak and I_{B} is the diffraction intensity of the 2θ = 27.33° ± 0.50° peak). Though the LGPS crystal phase having a peak in the vicinity of 2θ = 27.33° has low ionic conductivity, the sulfide solid electrolyte material of the present application had a value of I_{B}/I_{A} of less than 0.50, which suggests high ionic conductivity. However, if x is too low or too high in the electrolyte material having a composition formula of Li₄₋ₓ[Sn_{y}Si_{1-y}]₁₋ₓPₓS₄ of the present application, peaks of crystal structures other than the LGPS-type crystal structure, such as β-Li₃PS₄, Li₄SnS₄, and Li₄SiS₄ (corresponding to the composition of each vertex of the ternary diagram) are observed, and it is shown that it is not possible to obtain a single LGPS-type phase.

Furthermore, the inventors of the present application added the coefficient z to the composition ratio of Li and [Sn_{y}Si_{(1-y)}] to the above composition formula, and have discovered that a solid conductive material having excellent ionic conductivity can be obtained in the range of 0 > z ≥ -0.2 in the case of Li_{4-4z-x}[Sn_{y}Si_{1-y}]_{1+z-x}PₓS₄. z is related to the composition ratio of Li and [Sn_{y}Si_{(1-y)}] in the composition. The smaller the z, the lower the ratio of [Sn_{y}Si_{(1-y)}] and the higher the ratio of Li.

FIG. 3 shows examples of X-ray diffraction intensity patterns when z is changed under the conditions of 0.5 ≤ x ≤ 0.6 and y = 0.2 (z = -0.1 or -0.4). In all of the patterns, a large peak was observed in the vicinity of 2θ = 29.58 °. It can be seen that these compositions had an LGPS-type crystal structure with high ionic conductivity. However, when z was too low (when z = -0.4), the peak in the vicinity of 2θ = 27.33° becomes significant. As mentioned above, this peak is one of the peaks of the crystal phase having low ionic conductivity. Namely, the value of I_{B}/I_{A} described above may become 0.50 or more in some cases. Thus, the range of z is limited to 0 > z ≥ - 0.2. As a result, the value of I_{B}/I_{A} is less than 0.5, and a solid electrolyte material having good ionic conductivity is obtained.

FIG. 4 shows the change in lattice constant when x = 0.5 to 0.6 (z = 0) in the Li_{4-4z-x}[Sn_{0.2}Si_{0.8}]_{1+z-x}PₓS₄ electrolyte material useful for the understanding of the present application having the LGPS-type crystal phase. The value of lattice constant is the value obtained by Rietveld analysis based on the X-ray diffraction data. In the range of x = 0.5 to 0.6, the a-axis length of the lattice constant is 8.65 to 8.70 angstrom and the c-axis length is 12.55 to 12.62. In FIG. 4, as x increased in the range of 0.5 to 0.6, the a-axis length and c-axis length decreased gradually, which suggests that Sn-Si exists in a solid solution state in the LGPS-type crystal phase of the electrolyte material of the present application instead of the Ge of LGPS.

In the X-ray diffraction intensity pattern when z is 0 ≥ z ≥ -0.2, the value of I_{B}/I_{A} is less than 0.5, whereby it is thought that an LGPS-type sulfide solid electrolyte with high ionic conductivity is included therein. In other words, even when z varies with 0 ≥ z ≥ -0.2, it is considered that the LGPS-type crystal phase is maintained while the axis lengths of the lattice constant change smoothly.

FIG. 6 is a synchrotron X-ray Rietveld analysis pattern of the Li_{4-4z-x}[Sn_{y}Si_{1-y}]_{1+z-x}PₓS₄ electrolyte material of the present application. The observed data was represented by the symbol (+), and the actual radiation superimposed on the data is obtained by Rietveld analysis. The observed data and the analysis result are consistent. Further, the lowest line in FIG. 6 shows the difference between the observed value and the calculated value intensity. The difference is very small, confirming that the observed data and the analysis result are consistent. The vertical symbol (|) plotted between the upper and lower lines is the possible Bragg reflection position of the space group P4₂/nmc of the LGPS-type crystal phase. This also confirms that the electrolyte material of the present application has an LGPS-type crystal phase.

### (Conductivity of Sintered Pellets)

FIG. 7 shows the temperature-dependent impedance and an Arrhenius plot obtained by measuring the ionic conductivity of sintered pellets of the powder of the Li_{3.45}[Sn_{0.09}Si_{0.36}]P_{0.55}S₄ sulfide solid electrolyte material of the present application at 26 to 127 ° C. The ionic conductivity at room temperature found from this included 11.0 × 10⁻³ S/cm, demonstrating excellent conductivity comparable to 12.0 × 10⁻³ S/cm reported for conventional LGPS-type solid electrolytes. The ionic conductivity of the sintered pellets is shown in Table 1 and fluctuates with x, but was 7.95 × 10⁻³ S/cm to 11 × 10⁻³ S/cm.

Furthermore, as Comparative Examples, the ionic conductivity when a solid electrolyte other than the solid electrolyte of the present invention was used is as follows.

| | |
|---|---|
| Li_{9.81}Sn_{0.81}P_{2.19}S₁₂ (LSnPS) | 5 × 10⁻³ S/cm |
| Li_{7.2}Si_{0.2}P_{0.8}S₆ | 8.5 × 10⁻⁴ S/cm |
| Li_{3.225}[Sn_{0.735}Si_{0.99}]P_{0.375}S₆ | 3.9 × 10⁻⁵ S/cm |

The ionic conductivity of the sulfide solid electrolyte material of the present application is greatly improved as compared to these Comparative Examples.

### (Cyclic Voltammetry)

FIG. 8 shows the cyclic voltammetry of the Li_{3.45}[Sn_{0.09}Si_{0.36}]P_{0.55}S₄ sulfide solid electrolyte material of the present application, using Li metal and Au as electrodes. In FIG. 8, no significant current peaks were observed except for the peak due to the dissolution/precipitation reaction of lithium in the vicinity of 0 V vs. Li/Li⁺. The scan range was -0.5 to 5 V, suggesting that the sulfide solid electrolyte material of the present application was electrochemically stable in this range.

### (Constant Current Charge/Discharge Testing)

In the constant current charge/discharge testing, use was made of interposed all-solid-state lithium batteries constructed using, as a separator, the obtained sulfide solid electrolyte materials as a lithium ion conductive solid electrolyte, a lithium cobalt oxide coated with lithium niobate as a cathode, and a lithium-indium alloy as an anode. The batteries were charged and discharged at 1/20 C (= 7.25 mA/g). The charge/discharge results are shown in FIG. 9. It was shown that these batteries operated without issue.

Further, charge/discharge data (Comparative Examples) for batteries assembled using LGPS electrolytes is also shown in FIG. 9. As compared with the LGPS electrolytes, the interval between the charging and discharging curves of the Examples of the present invention was narrow and the polarization resistance was small since the resistance between the Si-Sn solid solution of the present invention and the electrode is smaller than the resistance between the LGPS and the electrode. This suggests that the reduction potential of the Si-Sn solid solution was lower. Furthermore, a larger capacity after 20 cycles than when using LGPS was actually demonstrated.

## Claims

1. A sulfide solid electrolyte, represented by the composition formula:
Li_{4-4z-x}[Sn_{y}Si_{1-y}]_{1+z-x}PₓS₄
where 0.5 ≤ x ≤ 0.6, y = 0.2, and 0 > z ≥ -0.2,
wherein
the sulfide solid electrolyte has a peak at position 2θ = 29.58° ± 0.50° in X-ray diffraction measurement using CuKα radiation and does not have a peak at position 2θ = 27.33° ± 0.50° in X-ray diffraction measurement using CuKα radiation, or when the sulfide solid electrolyte has a peak at the position 2θ = 27.33° ± 0.50°, the value of I_{B}/I_{A} is less than 0.50 (where I_{A} is the diffraction intensity of the 2θ = 29.58° ± 0.50° peak and I_{B} is the diffraction intensity of the 2θ = 27.33° ± 0.50° peak).

2. The sulfide solid electrolyte according to claim 1, wherein in a crystal phase having a peak at position 2θ = 29.58° ± 0.50°, the a-axis length of the lattice constant is 8.65 to 8.70 angstrom and the c-axis length is 12.55 to 12.62 angstrom.

3. The sulfide solid electrolyte according to claim 2, wherein in the axis length ranges, the axis lengths gradually decrease as x in the composition formula increases.

## Patentansprüche

1. Sulfid-Festelektrolyt, der durch die Zusammensetzungsformel dargestellt wird:
Li_{4-4z-x}[Sn_{y}Si_{1-y}]_{1+z-x}PₓS₄
wobei 0,5 ≤ x ≤ 0,6, y = 0,2 und 0 > z ≥ -0,2 gilt, wobei
der Sulfid-Festelektrolyt einen Peak an einer Position 2θ = 29.58° ± 0.50° bei einer Röntgenbeugungsmessung unter Verwendung von CuKa-Strahlung aufweist und keinen Peak an einer Position 2θ = 27.33° ± 0.50° bei der Röntgenbeugungsmessung unter Verwendung von CuKa-Strahlung aufweist, oder wenn der Sulfid-Festelektrolyt an der Position 2θ = 27.33° ± 0.50° einen Peak aufweist, der Wert von I_{B}/I_{A} kleiner als 0,50 ist (wobei I_{A} die Beugungsintensität des Peaks bei θ = 29.58° ± 0.50° ist und I_{B} die Beugungsintensität des Peaks 2 bei 2θ = 27.33° ± 0.50° ist).

2. Sulfid-Festelektrolyt nach Anspruch 1, wobei in einer Kristallphase, die einen Peak an einer Position 2θ = 29.58° ± 0.50° aufweist, die a-Achsenlänge der Gitterkonstante 8,65 bis 8,70 Angström beträgt und die c-Achsenlänge 12,55 bis 12,62 Angström beträgt.

3. Sulfid-Festelektrolyt nach Anspruch 2, wobei in den Bereichen der Achsenlängen die Achsenlängen allmählich abnehmen, wenn x in der Zusammensetzungsformel zunimmt.

## Revendications

1. Électrolyte solide au sulfure, représenté par la formule de composition :
Li_{4-4z-x}[Sn_{y}Si_{1-y}]_{1+z-x}PₓS₄
dans laquelle 0,5 ≤ x ≤ 0,6, y = 0,2, et 0 > z ≥ -0,2, dans lequel
l'électrolyte solide au sulfure présente un pic à la position 2θ = 29,58° ± 0,50° dans une mesure de diffraction aux rayons X en utilisant le rayonnement CuKα et ne présente pas de pic à la position 2θ = 27,33° ± 0,50° dans une mesure de diffraction aux rayons X en utilisant le rayonnement CuKa, ou lorsque l'électrolyte solide au sulfure présente un pic à la position 2θ = 27,33° ± 0,50°, la valeur de I_{B}/I_{A} est inférieure à 0,50 (où I_{A} est l'intensité de diffraction du pic à 2θ = 29,58° ± 0,50° et I_{B} est l'intensité de diffraction du pic à 2θ = 27,33° ± 0,50°).

2. Électrolyte solide au sulfure selon la revendication 1, dans lequel dans une phase cristalline ayant un pic à la position 2θ = 29,58° ± 0,50°, la longueur d'axe a de la constante de réseau est de 8,65 à 8,70 angströms et la longueur d'axe c est de 12,55 à 12,62 angströms.

3. Électrolyte solide au sulfure selon la revendication 2, dans lequel dans les plages de longueurs d'axe, les longueurs d'axe diminuent progressivement à mesure que x dans la formule de composition augmente.
